(19) Europäisches Patentamt
European Patent Office
Office européen des brevets

(11) EP 4 738 460 A1

(12) EUROPEAN PATENT APPLICATION
published in accordance with Art. 153(4) EPC

(43) Date of publication:
06.05.2026 Bulletin 2026/19

(21) Application number: 24868609.9

(22) Date of filing: 12.09.2024

(51) International Patent Classification (IPC):
H01M 4/36 (2006.01)     H01M 4/38 (2006.01)
H01M 10/052 (2010.01)     H01M 4/02 (2006.01)

(52) Cooperative Patent Classification (CPC):
H01M 4/02; H01M 4/36; H01M 4/38; H01M 10/052;
Y02E 60/10

(86) International application number:
PCT/KR2024/013943

(87) International publication number:
WO 2025/063632 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.09.2023 KR 20230125127
03.09.2024 KR 20240119502

(71) Applicants:
• LG Energy Solution, Ltd.
Seoul 07335 (KR)
• Korea Advanced Institute of Science and
Technology
Daejeon 34141 (KR)

(72) Inventors:
• JEONG, Yo-Chan
Daejeon 34122 (KR)
• LEE, Jinwoo
Daejeon 34141 (KR)
• SON, Donghyeok
Daejeon 34141 (KR)
• YANG, Seung-Bo
Daejeon 34122 (KR)
• LEE, Chang-Hoon
Daejeon 34122 (KR)
• HAN, Seongjun
Daejeon 34141 (KR)

(74) Representative: Goddar, Heinz J.
Boehmert & Boehmert
Anwaltspartnerschaft mbB
Pettenkoferstrasse 22
80336 München (DE)

(54) **CATHODE MATERIAL FOR LITHIUM-SULFUR BATTERY AND LITHIUM-SULFUR BATTERY INCLUDING SAME**

(57) The present disclosure relates to a carbon composite for use in a positive electrode of a lithium-sulfur battery and a method for producing the same, and the carbon composite includes a porous carbon material, and a catalyst located on at least one of an outer surface of the porous carbon material and an inner surface of pores of the porous carbon material, wherein the catalyst includes transition metal alloy particles and a carbon coating layer on at least part of a surface of the transition metal alloy particles, wherein the transition metal alloy particles include cobalt (Co) and iron (Fe), and wherein at least part of the carbon coating layer includes a crystalline carbon.

FIG. 2

**Description**

TECHNICAL FIELD

The present disclosure relates to a positive electrode material for a lithium-sulfur battery and a lithium-sulfur battery including the same.

The present application claims priority to Korean Patent Application No. 10-2023-0125127 filed on September 19, 2023 and Korean Patent Application No. 10-2024-0119502 filed on September 3, 2024 in the Republic of Korea, the disclosures of which are incorporated herein by reference.

BACKGROUND

A lithium-sulfur battery is a battery system using a sulfur-based material having a sulfur-sulfur (S-S) bond as a positive electrode active material and a lithium metal as a negative electrode active material. Sulfur, a main component of the positive electrode active material, is abundant in nature and can be found around the world, is non-toxic and has low atomic weight.

As secondary batteries are used in a wide range of applications including electric vehicles (EVs) and energy storage systems (ESSs), attention is drawn to lithium-sulfur batteries theoretically having higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic $S_8$ structure, and it is converted to lithium polysulfide ($Li_2S_x$) through the reduction reaction and is completely reduced to lithium sulfide ($Li_2S$).

Meanwhile, the amount of the electrolyte solution in a lithium-sulfur battery is the most important factor to be considered among many factors that determine the price and energy density of the lithium-sulfur battery. First, generally, in the materials of which the lithium-sulfur battery is made, because the lithium-sulfur battery includes the very thin lithium negative electrode and the electrolyte solution based on a high-priced lithium salt, the manufacturing cost of the lithium-sulfur battery is quite high. In contrast, the energy density of the lithium-sulfur battery relies on how much energy the manufactured cell produces compared to the total weight, and a ratio of the total cell weight to the energy produced is affected by sulfur loading per unit area at the positive electrode and the ratio of sulfur in the composite, but is more greatly affected by a ratio of electrolyte to sulfur (E/S) or a ratio of the amount of the electrolyte solution to the amount of sulfur in the positive electrode. Additionally, the ratio of the energy produced to the total cell weight is more greatly affected by capacity resulting from lithium-sulfur electrochemical reaction than the operating voltage. Accordingly, it is necessary to design stable lithium-sulfur batteries to minimize the amount of the electrolyte solution and achieve high reversible capacity in cells having low E/S ratios.

In particular, since sulfur used in the positive electrode active material is nonconductive, the migration of electrons produced by electrochemical reaction is inhibited, and there are problems with the elution of polysulfide ($LiS_x$) during charging and discharging and degradation in battery life and rate characteristics caused by slow kinetic activity in the electrochemical reaction due to low electrical conductivity of sulfur and lithium sulfide. In these circumstances, recently, many studies have been made to improve the performance of lithium-sulfur secondary batteries by improving the kinetic activity in the redox reaction of sulfur during charging and discharging by use of platinum (Pt) which has been primarily used as electrochemical catalysts. However, noble metal catalysts such as platinum are difficult to commercialize due to high costs and have poisoning risks by the redox reaction of sulfur during charging and discharging, so it is not easy to use as positive electrode materials of lithium-sulfur secondary batteries. Accordingly, there is a need for development of positive electrode materials for improving the kinetic activity in the electrochemical reaction during charge and discharge of lithium-sulfur secondary batteries and the cost efficiency for commercialization.

DISCLOSURE

Technical Problem

The present disclosure is designed to solve the above-described problem, and
therefore, the present disclosure is directed to providing a positive electrode material with improved lithium polysulfide adsorption and increased kinetic activity in the redox reaction of sulfur.

In particular, the present disclosure is directed to providing a carbon composite that has high mobility in lean electrolyte condition, and is good at maintaining the catalyst effect that accelerates the conversion reaction of lithium polysulfide. Through this, the present disclosure is directed to providing a positive electrode material for a lithium-sulfur battery with improved reversible capacity and life stability and high energy density in lean electrolyte condition and a lithium-sulfur battery including the same.

Technical Solution

To solve the above-described problem,
according to an aspect of the present disclosure, there is provided a carbon composite of the following embodiments.
The carbon composite according to a first embodiment includes:

a porous carbon material, and
a catalyst located on at least one of an outer surface of the porous carbon material and an inner surface of pores of the porous carbon material,
wherein the catalyst includes transition metal alloy particles and a carbon coating layer on at least part of a surface of the transition metal alloy particles,
wherein the transition metal alloy particles include cobalt (Co) and iron (Fe), and
wherein at least part of the carbon coating layer includes a crystalline carbon.

According to a second embodiment, in the first embodiment,
the transition metal alloy particles may include cobalt-iron alloy particles of body-centered cubic structure.
According to a third embodiment, in the first or second embodiment,
an average particle size ($D_{50}$) of the carbon composite may be in a range between 100 nm and 100 $\mu$m.
According to a fourth embodiment, in any one of the first to third embodiments,
an average particle size ($D_{50}$) of the catalyst may be 100 nm or less.
According to a fifth embodiment, in any one of the first to fourth embodiments,
a ratio of a thickness of the carbon coating layer to an average particle size ($D_{50}$) of the transition metal alloy particles may be 40% or less.
According to a sixth embodiment, in any one of the first to fifth embodiments,
a thickness of the carbon coating layer may be 10 nm or less.
According to a seventh embodiment, in any one of the first to sixth embodiments,
the carbon coating layer may have a single layer structure or a multilayer structure of 10 or less layers.
According to an eighth embodiment, in any one of the first to seventh embodiments,
an amount of the catalyst may be in a range between 5 wt% and 50 wt% based on 100 wt% of the carbon composite.
According to a ninth embodiment, in any one of the first to eighth embodiments,
the porous carbon material may include carbon nanotubes (CNT), graphene, graphene oxide (GO), reduced graphene oxide (rGO), carbon black, graphite, graphite nanofiber (GNF), carbon nanofiber (CNF), activated carbon fiber (ACF), activated carbon, fullerene, or two or more of them.
According to a tenth embodiment, in any one of the first to ninth embodiments,

the porous carbon material may include carbon nanotubes (CNT), and
the carbon nanotubes may include entangled CNT.

According to another aspect of the present disclosure, there is provided a method for producing a carbon composite according to the following embodiments.
The method for producing the carbon composite according to an eleventh embodiment may include:
producing the carbon composite according to any one of the first to tenth embodiments.
The method includes mixing a cobalt (Co)-containing precursor, an iron (Fe)-containing precursor, a carbon layer precursor and a porous carbon material to obtain a transition metal-carbon layer precursor polymer/porous carbon material (M-CPP/C), and
thermally treating the transition metal-carbon layer precursor polymer/porous carbon material to obtain the carbon composite.
According to a twelfth embodiment, in the eleventh embodiment,
the carbon layer precursor may include dopamine, polydopamine, melamine, 1,10-phenanthroline, polyaniline, carbon nitride (g-CN), glucose, phenylenediamine or a mixture thereof.
According to a thirteenth embodiment, in the eleventh or twelfth embodiment,
the thermal treatment may be performed at a temperature ranging from 600°C to 1,000°C.
According to still another aspect of the present disclosure, there are provided a positive electrode active material and a lithium-sulfur battery of the following embodiments.

The positive electrode active material according to a fourteenth embodiment may include:
the carbon composite according to any one of the first to tenth embodiments, and a sulfur-based compound.

The lithium-sulfur battery according to a fifteenth embodiment includes:

a positive electrode, a negative electrode and an electrolyte solution,
wherein the positive electrode may include the positive electrode active material according to the fourteenth embodiment.

According to a sixteenth embodiment, in the fifteenth embodiment,
an E/S ratio may be 8 $\mu$L/mg or less, and a sulfur loading in the positive electrode may be 2.25 $mg_s/cm^2$ or more. Here, the E/S ratio may indicate a ratio of a volume of the electrolyte solution and a sulfur weight in the positive electrode.

According to a seventeenth embodiment, in the fifteenth or sixteenth embodiment,
an E/S ratio may be 3 $\mu$L/mg or less, and an energy density may be 380 Wh/kg or more.

Advantageous Effects

The carbon composite according to an embodiment of the present disclosure has the improved lithium polysulfide (LiPS, $Li_2S_x$, $1<x\leq8$) adsorption through the metal catalyst. In addition, the carbon composite provides the improved kinetic activity in the redox reaction of sulfur.

Furthermore, as the carbon composite according to an embodiment of the present disclosure includes the catalyst that is less attached to the carbon material surface and has mobility on the carbon material surface to some extent, it may be possible to improve the access of polysulfide to the catalyst surface/electrolyte solution/carbon material triple phase interface at low E/S ratios.

Through this, it may be possible to provide the lithium-sulfur battery having high energy density and life stability by suppressing the catalytic activity reduction in lean electrolyte condition.

For example, according to an aspect of the present disclosure, it may be possible to achieve high energy density, for example, energy density of 300 Wh/kg or more, or 380 Wh/kg or more at the E/S ratio of 10 $\mu$L/mg or less, and specifically 2.5 $\mu$L/mg or less, but the effect of the present disclosure is not limited thereto.

BRIEF DESCRIPTION OF THE DRAWINGS

FIG. 1 is a diagram showing reaction occurring in a positive electrode material having low kinetic activity in conversion reaction of lithium sulfide ($Li_2S$) and lithium polysulfide ($Li_2S_x$, $1<x$). FIG. 1 shows the conversion reaction of lithium sulfide ($Li_2S$) and lithium polysulfide ($Li_2S_x$, $1<x$) and a porous carbon material and by-products on the surface and in the pores of the porous carbon material.

FIG. 2 is a diagram showing conversion reaction of lithium polysulfide using a carbon composite according to an embodiment of the present disclosure.

FIG. 3 shows a Scanning Transmission Electron Microscope (STEM) image (a) of a carbon composite according to an embodiment of the present disclosure and Energy Dispersive X-ray Spectroscopy (EDX) mapping result (b).

FIG. 4 shows a High Resolution Transmission Electron Microscopy (HRTEM) image (a) of a carbon composite according to an embodiment of the present disclosure and a graph (b) showing a result of measuring the distance between (110) planes through d-spacing.

FIG. 5 shows the X-Ray diffraction analysis (XRD) analysis result of a carbon composite according to an embodiment of the present disclosure. (a) is an XRD analysis graph of a porous carbon material (CNT), cobalt metal particles, iron metal particles, and cobalt-iron alloy particles, and (b) is an XRD analysis graph of four different carbon composites for investigating reproducibility.

FIG. 6 shows TEM images of different magnitudes of a carbon composite according to an embodiment of the present disclosure.

FIG. 7 is a graph showing a result of analyzing the amount of cobalt-iron alloy particles through thermogravimetric analysis (TGA) of a carbon composite according to an embodiment of the present disclosure.

FIG. 8 is a Cyclic Voltammetry (CV) graph of a lithium-sulfur battery (FeCo) using a carbon composite of Example 1 and a lithium-sulfur battery (Ref) using a carbon composite of Comparative Example 1 in the specification.

FIG. 9 is an Electrochemical Impedance Spectroscopy (EIS) graph of a lithium-sulfur battery (FeCo) using a carbon composite of Example 1 and a lithium-sulfur battery (Ref) using a carbon composite of Comparative Example 1 in the specification.

FIG. 10a is a voltage-capacity graph obtained in the 10th cycle for each of lithium-sulfur batteries using Example 1 and Comparative Example 1 in the specification.

FIG. 10b is a discharge capacity-cycle graph of lithium-sulfur batteries with E/S of 10 $\mu$L/mg using Example 1 and Comparative Example 1 in the specification.

FIG. 10c is a discharge capacity-cycle graph of lithium-sulfur batteries with positive electrode loading of 7 $mg_s/cm^2$, and E/S of 6 $\mu$L/mg using Example 1 and Comparative Example 1 in the specification.

FIG. 11 is a graph showing a result of measuring energy density changes over cycles for each of a lithium-sulfur battery with E/S ratio of two conditions using Example 1 and a lithium-sulfur battery using Comparative Example 1 in the specification.

<u>BEST MODE</u>

Hereinafter, the present disclosure is described in detail.

In the specification, the term "comprising" specifies the presence of stated elements, but does not preclude the presence or addition of one or more other elements unless expressly stated otherwise.

In the specification, "A and/or B" refers to either A or B or both.

The term "composite" as used herein refers to a material in which two or more materials are combined to form physically or chemically different phases and which exhibits more effective functions.

The term "(poly)sulfide" as used herein is the concept that covers "(poly)sulfide ion ($S_x^{2-}$, $1 \leq x \leq 8$)" and "lithium(poly)sulfide ($Li_2S_x$ or $Li_2S_x^{-}$, $1 \leq x \leq 8$)".

The term "polysulfide" as used herein is the concept that covers "polysulfide ion ($S_x^{2-}$, $1 < x \leq 8$)" and "lithium polysulfide ($Li_2S_x$ or $Li_2S_x^{-}$, $1 < x \leq 8$)".

The unit "$mg_s/cm^2$" as used herein indicates sulfur (S) weight per unit area unless stated otherwise, and may be interchangeably used with other expression such as mg(s)/cm², mAh/gs and the like.

A lithium-sulfur battery exhibits lower capacity than the theoretical capacity due to elution of lithium polysulfide produced by reduction reaction of sulfur ($S_8$) at the positive electrode into the electrolyte solution from the positive electrode during charging · discharging.

According to an aspect of the present disclosure, there is provided a carbon composite that has improved lithium polysulfide adsorption and improved mobility on the carbon material surface, provides enhanced kinetic activity in lean electrolyte condition and can be used in a high performance lithium-sulfur battery.

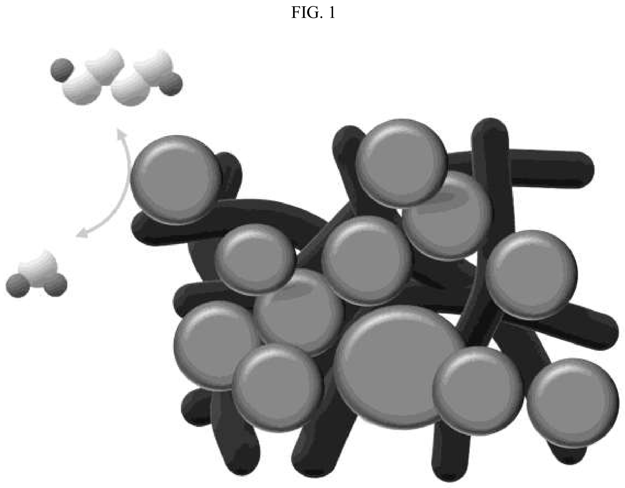

FIG. 1 is a diagram showing reaction occurring in a positive electrode material having low kinetic activity in conversion reaction of lithium sulfide ($Li_2S$) and lithium polysulfide ($Li_2S_x$, $1 < x$). Referring to FIG. 1, due to slow conversion reaction of lithium polysulfide, the pores and surface of a porous carbon material (for example, carbon nanotubes) are covered with lithium sulfide ($Li_2S$) and by-products, which further increases the irreversible capacity of the positive electrode, causing the lithium-sulfur battery to degrade fast.

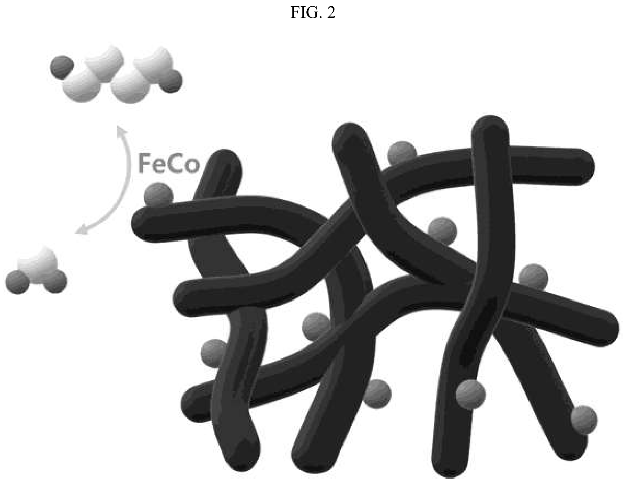

FIG. 2 is a diagram showing reaction using a carbon composite according to an aspect of the present disclosure. Referring to FIG. 2, a cobalt (Co) and iron (Fe)-containing alloy particle catalyst is located on the outer surface of a porous carbon material (for example, carbon nanotubes) and/or the inner surface of the pores of the porous carbon material. The catalyst may play a role in increasing the adsorption strength of the carbon composite and the lithium polysulfide due to lithium polysulfide adsorption. Accordingly, the addition of the cobalt (Co) and iron (Fe)-containing alloy particle catalyst may accelerate the conversion reaction of lithium sulfide ($Li_2S$) and lithium polysulfide ($Li_2S_x$, $1 < x$), thereby increasing the reversible capacity of the lithium-sulfur positive electrode using the same.

In particular, the carbon composite according to an aspect of the present disclosure may include bimetallic nanoparticles, iron (Fe) particles that accelerate reduction and cobalt (Co) particles that accelerate oxidation as the catalyst, to accelerate the conversion reaction during charging·discharging. Through this, it may be possible to achieve higher reversible capacity and stable charge and discharge in lean electrolyte condition, thereby realizing the lithium-sulfur battery with high energy density.

In an embodiment of the present disclosure, the catalyst has catalytic activity in oxidation and reduction reaction of a sulfur-based compound such as sulfur ($S_8$), lithium sulfide ($Li_2S$), lithium polysulfide ($Li_2S_x$, $1 < x \leq 8$), a disulfide compound and a mixture thereof as the positive electrode active material of the lithium-sulfur battery. However, the function of the material included as the catalyst is not limited thereto.

In an embodiment of the present disclosure, the catalyst may be positioned on either the outer surface of the porous carbon material or the inner surface of the pores of the porous carbon material, or both.

The carbon composite according to an aspect of the present disclosure includes the porous carbon material, and the catalyst located on at least one of the outer surface of the porous carbon material or the inner surface of the pores of the porous carbon material, and the catalyst includes transition metal alloy particles and a carbon coating layer on at least part of the surface of the transition metal alloy particles. Specifically, the transition metal alloy particles include cobalt (Co) and iron (Fe), and at least part of the carbon coating layer includes crystalline carbon.

According to an embodiment of the present disclosure, the catalyst includes bimetallic particles including both cobalt (Co) that accelerates oxidation reaction and iron (Fe) that accelerates reduction reaction in the conversion reaction of inorganic sulfur ($S_8$)↔lithium polysulfide ($Li_2S_x$, 1<x)↔lithium sulfide ($Li_2S$).

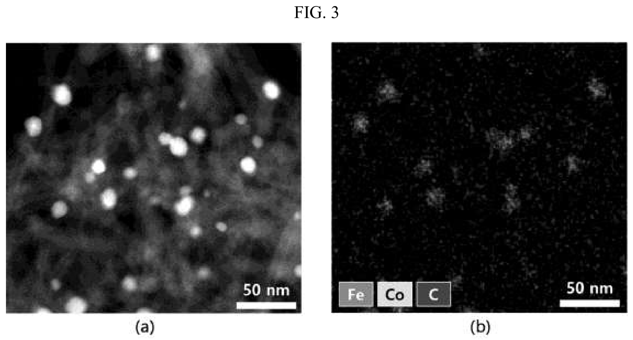

FIG. 3 show a Scanning Transmission Electron Microscope (STEM) image (a) of the carbon composite according to an embodiment of the present disclosure and an Energy Dispersive X-ray Spectroscopy (EDX) map by elemental analysis of the catalyst.

Referring to FIG. 3, the transition metal alloy particles included in the carbon composite according to an embodiment of the present disclosure may include nanoparticles of a cobalt (Co)-iron (Fe) alloy.

In an embodiment of the present disclosure, the catalyst includes the transition metal alloy particles in a core as an active component of the catalyst, and specifically the core of the catalyst may only include the transition metal alloy particles.

In an embodiment of the present disclosure, the transition metal alloy particles included in the core of the catalyst may only include the cobalt-iron alloy particles. Specifically, the sum of amounts of cobalt and iron may be 100 mol% based on 100 mol% of the transition metal alloy particles.

In another embodiment of the present disclosure, in addition to the cobalt-iron alloy particles, the core of the catalyst may further include, for example, at least one metal element selected from zinc (Zn), vanadium (V), chromium (Cr), manganese (Mn), nickel (Ni), copper (Cu), zirconium (Zr), niobium (Nb), molybdenum (Mo), technetium (Tc), rubidium (Ru), rhodium (Rh), palladium (Pd), silver (Ag), cadmium (Cd), lanthanum (La), hafnium (Hf), tantalum (Ta), tungsten (W), osmium (Os), iridium (Ir), cerium (Ce), gadolinium (Gd), scandium (Sc), titanium (Ti), gallium (Ga) and indium (In) without hindering the objective of the present disclosure. Specifically, the core of the catalyst may further include alloy particles of cobalt-iron and the selected transition metal, but the present disclosure is not limited thereto. In this case, the core may preferably have the sum of amounts of cobalt and iron of 90 mol% or more, or 95 mol% or more based on 100 mol% of the elements, but the present disclosure is not limited thereto.

In an embodiment of the present disclosure, the transition metal alloy particles may be metal particles grown from a transition metal-containing precursor, and may have, for example, a spherical, elliptical or oval, sheet-like, platy, fibrous, needle-like or hollow shape.

In an embodiment of the present disclosure, the catalyst may include alloy particles including both cobalt and iron. Specifically, the catalyst may include cobalt-iron alloy particles having a body-centered cubic structure (BCC).

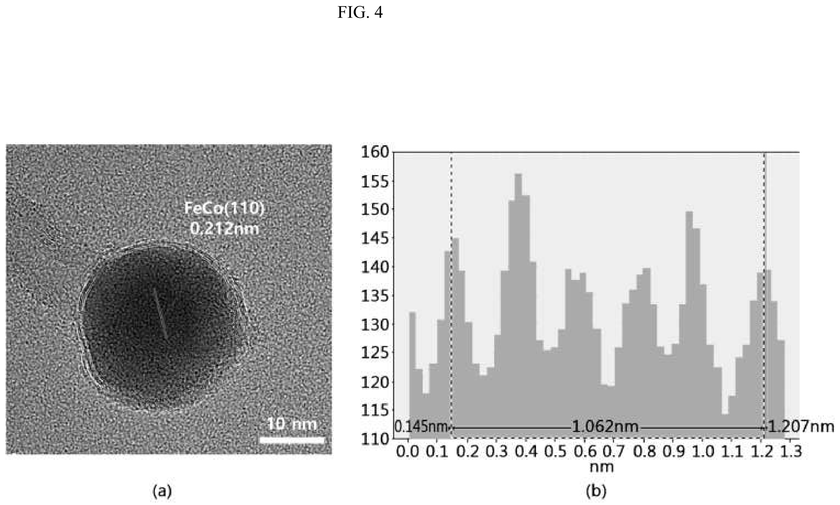

FIG. 4 shows a High Resolution Transmission Electron Microscopy (HRTEM) image (a) of the carbon composite according to an embodiment of the present disclosure and a graph (b) showing the result of measuring the distance between (110) planes through d-spacing.

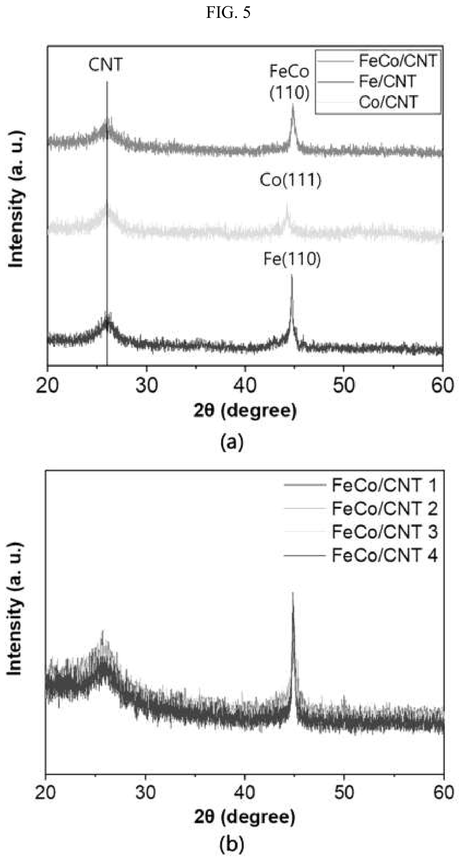

FIG. 5 shows the XRD analysis result of the carbon composite according to an embodiment of the present disclosure.

Referring to FIGS. 4 and 5, as a result of analyzing d-spacing of the catalyst, to be specific, the cobalt-iron alloy particles, included in the carbon composite according to an embodiment of the present disclosure, the d-spacing (110) matches the distance between planes, confirming that the cobalt-iron alloy particles have a body-centered cubic structure.

In an embodiment of the present disclosure, the transition metal alloy particles may have, for example, an average particle size ($D_{50}$) between 1 nm and 90 nm. Specifically, the average particle size ($D_{50}$) of the transition metal alloy particles may range from 1 nm to 80 nm, from 2 nm to 50 nm, from 5 nm to 40 nm, from 5 nm to 35 nm, from 5 nm to 30 nm or from 10 nm to 20 nm. When the size of the transition metal alloy particles lies in the aforementioned range, this may have a beneficial effect on high conductivity of electrons and/or ions, and improved performance and manufacturing process of the battery, but the present disclosure is not limited thereto.

In the specification, the particle size may be measured by a commonly used method and the measurement method is not limited to a particular one. For example, the particle size may be measured by scanning electron microscopy (SEM), field-emission electron microscopy or laser diffraction. The measurement using laser diffraction may be, for example, performed using the commercially available laser diffraction particle size analyzer (e.g., Microtrac MT 3000). The average particles size ($D_{50}$) refers to a particle size at 50% of the cumulative volume distribution.

Specifically, the catalyst has a structure in which at least part of the surface of the transition metal alloy particles is coated by the carbon coating layer.

The carbon coating layer may function to control the size of the transition metal alloy particles and provide sites for bonding with the porous carbon material onto which the catalyst is loaded, for loading onto the porous carbon material. Additionally, the carbon coating layer may function to stably maintain the metallic phase of the transition metal alloy particles of the core. For example, the carbon coating layer may function to hinder direct chemical bonds of lithium polysulfide in the electrolyte solution to the surface of the transition metal alloy particles, thereby stably maintaining the catalytic activity by the transition metal alloy particles during the operation of the lithium-sulfur battery. In the present disclosure, the function of the carbon coating layer is not limited to the above-described function.

In an embodiment of the present disclosure, the surface area of the core covered by the carbon coating layer is not limited thereto, but may be, for example, 50% or more, 60% or more, 70% or more, 80% or more, 90% or more, 95% or more, or 99% or more of the total surface area of the core.

In an embodiment of the present disclosure, the carbon coating layer may cover the entire surface of the core. As described below, when the carbon coating layer is formed on the entire surface of the core, this may have a beneficial effect on activity stabilization of the transition metal alloy particles by the carbon coating layer, but the present disclosure is not limited thereto. For example, when the transition metal alloy particles are loaded onto the carbon composite without coating of the carbon coating layer, the transition metal alloy particles may be formed in nonuniform size, resulting in low catalyst stability, and consequential poor life stability of the battery during the operation of the battery using the same but the present disclosure is not limited thereto.

In the specification, the surface area of the core covered by the carbon coating layer may be, for example, measured through TEM. The TEM may use G2 F30 S-Twin, Tencai, but is not limited thereto.

In an embodiment of the present disclosure, a ratio of the thickness of the carbon coating layer to the average particle size ($D_{50}$) of the transition metal alloy particles may be 40% or less. For example, the ratio of the thickness of the carbon coating layer to the average particle size ($D_{50}$) of the transition metal alloy particles may be 30% or less, 25% or less, 20% or less, or 15% or less. For example, the ratio of the thickness of the carbon coating layer to the average particle size ($D_{50}$) of the transition metal alloy particles may be 1% or more, 5% or more, 7.5% or more, or 10% or more. For example, the ratio of the thickness of the carbon coating layer to the average particle size ($D_{50}$) of the transition metal alloy particles may range from 10% to 20% or from 10% to 15%. When the ratio of the thickness of the carbon coating layer to the average particle size of the transition metal alloy particles lies in the aforementioned range, this may have a beneficial effect on activity stabilization of the transition metal alloy particles by the carbon coating layer, but the present disclosure is not limited thereto. Additionally, the carbon coating layer may cover the surface of the transition metal alloy particles with a small thickness, thereby loading the transition metal alloy particles in uniform size onto the porous carbon material, and enhancing catalytic activity by the transition metal alloy particles. For example, when the thickness of the carbon coating layer is 40% or less of the total thickness of the transition metal alloy particles, it may be possible to maintain good interactions between the transition metal alloy particles located in the carbon coating layer and the lithium polysulfide coming from the outside of the carbon coating layer.

In an embodiment of the present disclosure, the carbon coating layer that covers the surface of the transition metal alloy particles may have a uniform thickness. For example, the standard deviation ($\triangle d$) of thickness measured at ten random points of the carbon coating layer formed on the surface of the core may be 0.5 nm or less.

In an embodiment of the present disclosure, the carbon coating layer may cover the entire surface of the transition metal alloy particles, and the standard deviation ($\triangle d$) of thickness measured at 100 random points over the entire surface of the carbon coating layer may be 0.5 nm or less.

In an embodiment of the present disclosure, as the thickness of the carbon coating layer is smaller, interactions between the transition metal particles and the lithium polysulfide may be improved, thereby improving catalytic activity by the transition metal particles, but the present disclosure is not limited thereto.

In an embodiment of the present disclosure, the carbon coating layer may, for example, have the thickness of 10 nm or less. Specifically, the thickness of the carbon coating layer may be 5 nm or less. In an embodiment of the present disclosure, the thickness of the carbon coating layer may be, for example, 0.5 nm or more. More specifically, the thickness of the carbon coating layer may range, for example, from 1 nm to 5 nm or from 0.5 nm to 2 nm.

The thickness of the carbon coating layer may be, for example, measured through microscope observation in an SEM image or a TEM image of the carbon composite, but the method for measuring the thickness of the carbon coating layer is not limited thereto.

Unless otherwise expressly specified, the SEM image may be obtained using S-4800 field emission, Hitachi, and the TEM image may be obtained using G2 F30 S-Twin, Tencai.

In an embodiment of the present disclosure, the carbon coating layer may be a single layer.

In another embodiment of the present disclosure, the carbon coating layer may have a multilayer structure of 2 or more layers. For example, the carbon coating layer may have a multilayer structure of 2 or more layers and 10 or less layers. Specifically, the carbon coating layer may have a multilayer structure of 2 to 10 layers, a multilayer structure of 2 to 5 layers, a multilayer structure of 2 to 4 layers, or a multilayer structure of 2 to 3 layers. When the carbon coating layer is a multilayer, this may have a beneficial effect on catalytic activity of the carbon composite, but the present disclosure is not limited thereto.

In an embodiment of the present disclosure, the carbon coating layer may include crystalline carbon. For example, in another embodiment of the present disclosure, the carbon coating layer may consist of crystalline carbon. For example, the carbon coating layer may be formed by carbonization of a carbon precursor, and may only include crystalline carbon.

In the specification, the "crystalline" carbon represents the presence of 3-dimensional scale carbon at atomic dimension level. For example, whether it is crystalline or not may be determined through diffraction technique, measurement of enthalpy of fusion, TEM and the like. For example, whether it is crystalline or not may be determined through at least one distinct peak of each carbon in the XRD spectrum.

Referring back to FIG. 4, it may be confirmed that the catalyst includes the transition metal alloy particles as the core, and the carbon coating layer that covers at least part of a surface of the core. Specifically, it may be confirmed that at least part of the carbon coating layer includes crystalline carbon.

In an embodiment of the present disclosure, the carbon coating layer may include at least one different element other than carbon as a dopant element. For example, the different element may include one selected from nitrogen (N), sulfur (S) and oxygen (O) or two or more of them.

As described below, to produce the carbon composite, the steps of mixing the porous carbon material, the cobalt (Co)-containing precursor, the iron (Fe)-containing precursor and the carbon layer precursor and performing thermal treatment may be performed. In this instance, the carbon layer precursor may include at least one different element selected from nitrogen, sulfur and oxygen. Accordingly, the carbon coating layer may be formed on the surface of the transition metal alloy particles by carbon derived from the carbon layer precursor, and the different element derived from the carbon layer precursor may be doped into at least one of the porous carbon material and the carbon coating layer.

As described above, according to an embodiment of the present disclosure, the carbon coating layer may have, for example, the multilayer structure of 2 to 3 layers that covers the entire surface of the transition metal alloy particles, and may include the crystalline carbon having the total thickness of 5 nm or less and doped with at least one nitrogen.

In an embodiment of the present disclosure, an average particle size ($D_{50}$) of the catalyst may be 100 nm or less. For example, the average particle size ($D_{50}$) of the catalyst may range from 2 nm to 100 nm, from 2 nm to 90 nm, from 5 nm to 80 nm, from 5 nm to 75 nm, from 5 nm to 60 nm, from 5 nm to 50 nm, from 5 nm to 40 nm, from 5 nm to 30 nm, from 5 nm to 25 nm, from 5 nm to 21 nm, from 10 nm to 21 nm, or from 11 nm to 21 nm. When the size of the transition metal composite particles lies in the aforementioned range, this may have a beneficial effect on high conductivity of electrons and/or ions, and improved performance and manufacturing process of the battery, but the present disclosure is not limited thereto.

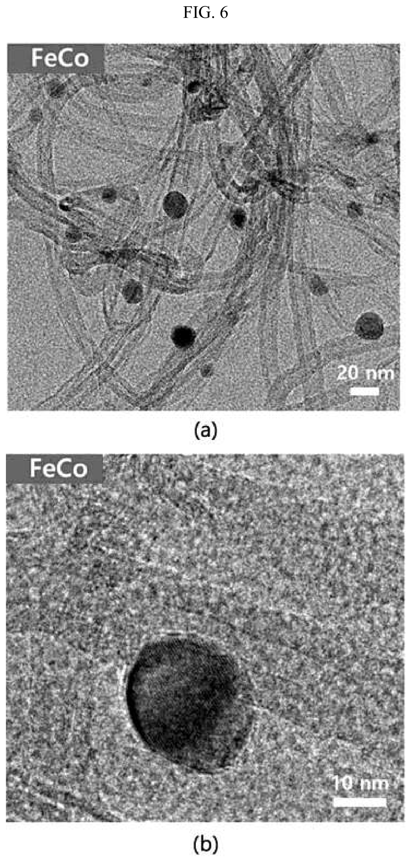

FIG. 6 shows TEM images of different magnitudes of the carbon composite according to an embodiment of the present disclosure. Specifically, FIG. 6 shows the TEM image of the carbon composite in which the catalyst including cobalt-iron alloy particles is located on the surface of carbon nanotubes (CNT) as the porous carbon material. Referring to FIG. 6(a), it is observed that the catalyst is located on the outer surface of the porous carbon material and/or the inner surface of the pores of the porous carbon material. Additionally, referring to FIG. 6(b), it can be seen that the particle size of the catalyst is at the level of 100 nm or less, for example, between 10 nm and 30 nm.

According to an aspect of the present disclosure, the catalyst is located on the outer surface of the porous carbon material and/or the inner surface of the pores of the porous carbon material.

In an embodiment of the present disclosure, the porous carbon material improves the conductivity of the catalyst, and has a function of a host for providing the catalyst as the component of the electrode.

In the present disclosure, the catalyst alone may be used as the catalyst in the positive electrode of the lithium-sulfur battery to impart activity to the reduction reaction of the lithium polysulfide. However, according to the present disclosure, when the catalyst is located on the outer surface of the porous carbon material and/or the inner surface of the pores of the porous carbon material, it may be possible to further improve lithium polysulfide adsorption and activation of the oxidation/reduction reaction of sulfur.

The porous carbon material includes a material including a plurality of micropores, and the catalyst is loaded onto at least one of the outer surface of the porous carbon material and the inner surface of the pores of the porous carbon material.

In an embodiment of the present disclosure, the porous carbon material may include at least one different element other than carbon as the dopant element. Specifically, the different element may include one selected from nitrogen (N), sulfur (S) and oxygen (O) or two or more of them.

Specifically, in an embodiment of the present disclosure, at least one carbon atom present in the porous carbon material and/or the carbon coating layer may have a substituted structure by the different element.

In another embodiment of the present disclosure, when both the porous carbon material and the carbon coating layer in the catalyst include the at least one different element other than carbon as the dopant element, the different elements may be derived from the same precursor as described below and thus they may include the same element.

In still another embodiment of the present disclosure, the different elements included in the porous carbon material and the carbon coating layer may each independently include one selected from nitrogen, sulfur and oxygen or two or more of them. Specifically, the different element doped into the porous carbon material may be derived from the precursor that is different from the different element included in the carbon coating layer. For example, to improve the bonding with the catalyst or the lithium polysulfide in the electrolyte solution, the porous carbon material may be doped using the precursor containing one selected from nitrogen, sulfur and oxygen or two or more of them, and mixed with the transition metal particles to form the carbon composite.

In an embodiment of the present disclosure, the catalyst may be located on at least one of the outer surface of the porous carbon material and the inner surface of the pores of the porous carbon material by chemical and/or physical bonds.

In an embodiment of the present disclosure, the catalyst may be physically adsorbed onto the outer surface of the porous carbon material and/or the inner surface of the pores of the porous carbon material. Alternatively, the catalyst may be chemically bonded to the outer surface of the porous carbon material and/or the inner surface of the pores of the porous carbon material by C-C covalent bonds and/or pi-pi interactions between the element present in the catalyst and carbon of the porous carbon material. Additionally, both the physical adsorption and chemical bonds may exist between the catalyst and the porous carbon material.

In an embodiment of the present disclosure, the porous carbon material includes the plurality of micropores in the outer surface and the inside thereof. The average diameter of the micropores may range, for example, from 5 nm to 100 nm, specifically from 5 nm to 80 nm, from 5 nm to 60 nm, or from 5 nm to 50 nm. The average diameter of the micropores indicates a pore diameter at 50% of the pore size distribution. The pore diameter may be, for example, measured through TEM analysis of the pore diameter in a direction perpendicular to the surface of the porous carbon material, but the measurement method is not limited thereto.

The porous carbon material is not limited to a particular material and may include any material that includes a plurality of micropores and loads the catalyst as described above.

In an embodiment of the present disclosure, the specific material of the porous carbon material may include, for example, carbon nanotubes (CNT), graphene, graphene oxide (GO), reduced graphene oxide (rGO), carbon black, graphite nanofiber (GNF), carbon nanofiber (CNF), activated carbon fiber (ACF), natural graphite, artificial graphite, expandable graphite, activated carbon, fullerene or two or more of them.

In an embodiment of the present disclosure, when the porous carbon material includes carbon nanotubes, the carbon nanotubes may include single-walled carbon nanotubes (SWCNT), multi-walled carbon nanotubes (MWCNT) or both.

In another embodiment of the present disclosure, when the porous carbon material includes carbon nanotubes, the carbon nanotubes may include entangled CNT formed as a secondary structure, i.e., agglomerate of a plurality of primary structures, carbon nanotubes being a primary structure.

According to an embodiment of the present disclosure, compared to the carbon nanotubes of primary structure, the entangled CNT may have improved porosity by interstitial volume formed by the entanglement of the carbon nanotubes of primary structure.

In an embodiment of the present disclosure, the size of the porous carbon material is not limited thereto, but may range, for example, from 10 $\mu$m to 100 $\mu$m, and specifically from 20 $\mu$m to 50 $\mu$m. When the size of the porous carbon material lies in the aforementioned range, this may have a beneficial effect on solids adjustment in the preparation of a slurry for forming an electrode active material layer and the electrode properties, for example, adhesive strength, and battery performance (output and capacity).

In an embodiment of the present disclosure, the pore volume of the porous carbon material may range, for example, from 1 cm$^3$/g to 5 cm$^3$/g, and specifically, from 1 cm$^3$/g to 4 cm$^3$/g. For example, the pore volume may be a measured value calculated through $N_2$ isotherm analysis obtained based on the adsorption of liquid nitrogen.

In an embodiment of the present disclosure, the BET specific surface area of the porous carbon material is not limited thereto, but may range, for example, from 150 m$^2$/g to 2,000 m$^2$/g, and specifically from 250 m$^2$/g to 700 m$^2$/g.

The BET specific surface area may be measured by the BET method, and may indicate a value measured by the known method for measuring the BET specific surface area. For example, the BET specific surface area may be a value calculated from the volume of nitrogen gas adsorbed under the liquid nitrogen temperature (77 K) using BELSORP-mini II from BEL Japan.

As described above, according to an aspect of the present disclosure, there is provided the carbon composite including the catalyst on at least one of the outer surface of the porous carbon material and the inner surface of the pores of the porous carbon material.

In an embodiment of the present disclosure, the carbon composite may have, for example, the average particle size ($D_{50}$) between 100 nm and 100 $\mu$m, and specifically between 10 $\mu$m and 50 $\mu$m. Additionally, the carbon composite may have, for example, the pore volume between 0.5 cm$^3$/g and 4 cm$^3$/g, and specifically between 1 cm$^3$/g and 3 cm$^3$/g. Additionally, the carbon composite may have, for example, the BET specific surface area between 150 m$^2$/g and 500 m$^2$/g, and specifically between 250 m$^2$/g and 300 m$^2$/g.

In an embodiment of the present disclosure, the amount of the catalyst may be, for example, 50 wt% or less based on the total 100 wt% of the carbon composite. Specifically, the amount of the catalyst may be in a range between 5 wt% and 50 wt%, between 5 wt% and 30 wt%, between 10 wt% and 20 wt% or between 10 wt% and 15 wt% based on the total 100 wt% of the carbon composite. When the amount of the catalyst lies in the aforementioned range, this may have a beneficial effect on sufficient sites for catalytic activity, and conductivity of electrons and/or ions in the electrode. Accordingly, it may be possible to improve the performance of the battery using the same, but the present disclosure is not limited thereto.

In another embodiment of the present disclosure, a weight ratio of the porous carbon material and the catalyst in the carbon composite may range, for example, from 95:5 to 70:30. Specifically, the weight ratio of the porous carbon material and the catalyst may range from 90:10 to 80:20 or from 95:5 to 85:15. When the weight ratio of the porous carbon material and the catalyst lies in the aforementioned range, this may have a beneficial effect on sufficient sites for catalytic activity, and suppression or prevention of agglomeration of the catalyst, thereby improving resistance characteristics.

Accordingly, it may be possible to improve the performance of the battery using the same, but the present disclosure is not limited thereto.

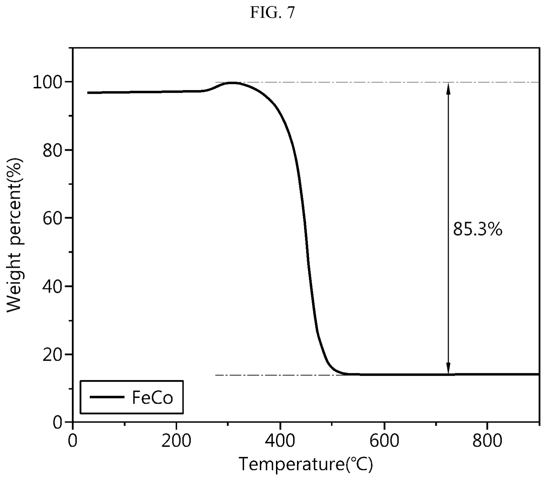

FIG. 7 is a graph showing a result of analyzing the amount of the cobalt-iron alloy particles through thermogravimetric analysis (TGA) of the carbon composite according to an embodiment of the present disclosure. Referring to FIG. 7, the analysis reveals that the amount of the cobalt-iron alloy particles in the carbon composite is 14.7 wt% based on the 100 wt% of the carbon composite.

In an embodiment of the present disclosure, the carbon composite includes the different element in at least one of the porous carbon material and the carbon coating layer. In an embodiment of the present disclosure, the amount of the different element may be, for example, 0.1 wt% or more, or 0.5 wt% or more based on 100 wt% of the carbon composite. Additionally, the amount of the different element may be, for example, 20 wt% or less, or 10 wt% or less based on 100 wt% of the carbon composite, but is not limited thereto. Specifically, the amount of the different element may be, for example, in a range between 0.1 wt% and 20 wt%, and specifically between 0.5 wt% and 10 wt% based on the total 100 wt% of the carbon composite. When the amount of the different element lies in the aforementioned range, this may have a beneficial effect on acceleration of the catalytic activity of the transition metal alloy particles and lithium polysulfide adsorption.

In an embodiment of the present disclosure, as described above, the core of the catalyst includes the transition metal alloy particles formed through bonds between transition metal atoms.

In another embodiment of the present disclosure, the carbon composite may further include a free transition metal atom from the transition metal particles in single-atom state without impeding the catalytic activity of the carbon composite.

The state in which the transition metal atoms are included in the carbon composite may be, for example, determined through extended X-ray absorption fine structure (EXAFS) analysis. Specifically, when the transition metal atoms of the transition metal particles are included in the carbon composite in a single-atom state without metallic bonding, according to the EXAFS analysis result, bonds between the transition metal element and the different element are identified. In contrast, when two or more transition metal atoms are included in the carbon composite in a metal particle state by metallic bonding, according to the EXAFS analysis result, bonds between the transition metal elements are identified.

In an embodiment of the present disclosure, when bonds between elements in the carbon composite are identified by EXAFS analysis, the carbon composite may include a larger number of bonds between the transition metal elements than the number of bonds between the transition metal element and the different element. In another embodiment of the present disclosure, when bonds between elements in the carbon composite are identified by EXAFS analysis, the peak intensity for the bonds between the transition metal elements may be, for example, at least 10 times, specifically at least 20 times, and more specifically at least 50 times higher than the peak intensity for the bonds between the transition metal element and the different element.

The carbon composite of the present disclosure may provide the sites for bonding with the lithium polysulfide, and exhibit catalytic activity in the redox reaction of sulfur, thereby improving life stability of the lithium-sulfur battery using the same. In addition, the catalyst in the carbon composite may have mobility on the porous carbon material surface, thereby achieving stable performance of the lithium-sulfur battery using the same in lean electrolyte condition and achieving high energy density, but the mechanism of the present disclosure is not limited thereto.

According to an embodiment of the present disclosure, the carbon composite, combined with a sulfur-based compound as a host of the positive electrode active material such as the sulfur-based compound, may be used as the positive electrode active material. Alternatively, the carbon composite itself may be used as an additive to the positive electrode.

According to an embodiment of the present disclosure, the carbon composite may be used as an additive to a separator of the lithium-sulfur battery.

Another aspect of the present disclosure provides a method for producing the carbon composite.

The above-described carbon composite may be produced through the method for producing the carbon composite, but the method for producing the carbon composite is not limited thereto.

The method for producing the carbon composite includes mixing the cobalt (Co)-containing precursor, the iron (Fe)-containing precursor, the carbon layer precursor and the porous carbon material to obtain the transition metal-carbon layer precursor polymer/porous carbon material (M-CPP/C), and thermally treating the transition metal-carbon layer precursor polymer/porous carbon material to obtain the carbon composite.

As described above, according to an embodiment of the present disclosure, the carbon layer precursor may include at least one different element selected from nitrogen (N), sulfur (S) and oxygen (O), but the present disclosure is not limited thereto.

First, each of the cobalt-containing precursor and the iron-containing precursor may be a precursor for forming the transition metal alloy particles included in the core of the catalyst. The cobalt-containing precursor and the iron-containing precursor may be a precursor including cobalt and a precursor including iron, respectively, but a single material including both cobalt and iron may be added as the precursor. That is, the present disclosure is not limited to each of the material that provides cobalt and the material that provides iron, or the single material as the raw material.

In an embodiment of the present disclosure, each of the cobalt-containing precursor and the iron-containing precursor may include cobalt and/or iron-containing metal salt, metal acetyl acetonate, metal hydroxide, metal chloride, metal oxide, metal chloride hydrate, or two or more of them.

In another embodiment of the present disclosure, each of the cobalt-containing precursor and the iron-containing precursor may only include a metal salt containing the transition metal element. When only the metal salt is included as the cobalt-containing precursor and the iron-containing precursor, it may be possible to simplify the method for producing the catalyst, easily control the size of the produced catalyst, and improve catalytic activity.

In an embodiment of the present disclosure, for example, the cobalt-containing precursor may include, as the cobalt metal salt, a cobalt acetyl acetonate, a cobalt hydroxide, a cobalt chloride, a cobalt oxide, a cobalt chloride hydrate, or two or more of them.

In an embodiment of the present disclosure, the cobalt-containing precursor may include a cobalt chloride hexahydrate as the cobalt metal salt.

In an embodiment of the present disclosure, for example, the iron-containing precursor may include, as the iron metal salt, an iron acetyl acetonate, an iron hydroxide, an iron chloride, an iron oxide, an iron hydrate, or two or more of them.

In an embodiment of the present disclosure, the iron-containing precursor may include an iron chloride hexahydrate as the iron metal salt.

In an embodiment of the present disclosure, in addition to the cobalt-containing precursor and the iron-containing precursor, the raw material may further include a precursor including any other transition metal element as the transition metal-containing precursor. In this instance, the transition metal element that may be further included may include, for example, at least one selected from zinc (Zn), vanadium (V), chromium (Cr), manganese (Mn), nickel (Ni), copper (Cu), zirconium (Zr), niobium (Nb), molybdenum (Mo), technetium (Tc), rubidium (Ru), rhodium (Rh), palladium (Pd), silver (Ag), cadmium (Cd), lanthanum (La), hafnium (Hf), tantalum (Ta), tungsten (W), osmium (Os), iridium (Ir), cerium (Ce), gadolinium (Gd), scandium (Sc), titanium (Ti), gallium (Ga) and indium (In). For example, the transition metal-containing precursor that may be further included may further include a nickel acetyl acetonate, a nickel hydroxide, a nickel chloride, a nickel oxide, a nickel hydrate, or two or more of them, but the present disclosure is not limited thereto.

In an embodiment of the present disclosure, the carbon layer precursor is a precursor for forming the carbon coating layer for coating at least part of the surface of the transition metal alloy particles.

In the present disclosure, the carbon layer precursor may include at least one different element selected from nitrogen, sulfur and oxygen, to act as a precursor for doping the different element into at least one of the carbon coating layer and the porous carbon material.

In an embodiment of the present disclosure, the carbon layer precursor may include the different element other than carbon, the different element may be at least one selected from nitrogen, sulfur and oxygen as described above, and the carbon precursor is not limited to a particular type and may include any carbon precursor that provides the crystalline carbon coating layer by carbonization.

The carbon layer precursor may include, for example, carbon and nitrogen, and may include dopamine, polydopamine, melamine, 1,10-phenanthroline, polyaniline, carbon nitride (g-CN), glucose, phenylenediamine or a mixture thereof.

In an embodiment of the present disclosure, for the porous carbon material, reference is made to the foregoing description.

The method for producing the carbon composite includes mixing the cobalt (Co)-containing precursor, the iron (Fe)-containing precursor, the carbon layer precursor and the porous carbon material.

In an embodiment of the present disclosure, a weight ratio of the cobalt-containing precursor, the iron-containing precursor and the carbon layer precursor may be, for example, 1~3:1~3:1~3, specifically 1~2:1~2:1~2, and more specifically 1~1.5:1~1.5:1~1.5, but the present disclosure is not limited thereto.

In an embodiment of the present disclosure, a weight ratio of the total weight of the cobalt-containing precursor and the iron-containing precursor and the porous carbon material may range, for example, from 1:1 to 1:10, specifically from 1:1 to 1:8, and more specifically from 1:1 to 1:5 or from 1:1 to 1:3, but the present disclosure is not limited thereto.

In an embodiment of the present disclosure, a weight ratio of the carbon layer precursor and the porous carbon material may range, for example, from 1:10 to 1:5, specifically from 1:1 to 1:3, and more specifically from 1:1 to 1:2.5 or from 1:2 to 1:2.5, but the present disclosure is not limited thereto.

In an embodiment of the present disclosure, when the weight ratio of the cobalt-containing precursor, the iron-containing precursor, the carbon layer precursor and the porous carbon material lies in the aforementioned range, this may have a beneficial effect on the performance of the produced carbon composite, but the present disclosure is not limited thereto.

In an embodiment of the present disclosure, the method for producing the carbon composite may include the step of mixing the cobalt-containing precursor, the iron-containing precursor and the carbon layer precursor first, then mixing with the porous carbon material and performing thermal treatment. When mixing the cobalt-containing precursor, the iron-containing precursor and the carbon layer precursor first and then mixing with the porous carbon material to produce the carbon composite, this may have a beneficial effect on uniformity in the thickness of the carbon coating layer and uniformity in the size of the catalyst, but the present disclosure is not limited thereto.

In an embodiment of the present disclosure, the method for producing the carbon composite may include:

(S1) mixing the cobalt-containing precursor, the iron-containing precursor and the carbon layer precursor to form the transition metal-carbon layer precursor polymer (M-C precursor polymer),
(S2) mixing the transition metal-carbon layer precursor polymer and the porous carbon material to obtain the transition metal-carbon layer precursor polymer/porous carbon material (M-CPP/C), and
(S3) thermally treating the transition metal-carbon layer precursor polymer/porous carbon material (M-CPP/C) to obtain the carbon composite.

The step (S1) may include mixing the cobalt-containing precursor, the iron-containing precursor and the carbon layer precursor to produce a metal-carbon layer precursor complex (M-C precursor complex) by physical and/or chemical bonds of the carbon layer precursor to the surface of the cobalt-containing precursor and the iron-containing precursor.

In an embodiment of the present disclosure, the mixing of the cobalt-containing precursor, the iron-containing precursor and the carbon layer precursor may be performed in an appropriate solvent, and stirring may be accompanied. In this instance, when each of the cobalt-containing precursor, the iron-containing precursor is a metal salt, the solvent may be preferably water, but is not limited thereto.

In an embodiment of the present disclosure, in the step (S1), the mixing may be performed at room temperature, for example, at the temperature between 23°C and 25°C.

In an embodiment of the present disclosure, in the step (S1), when stirring is performed during the mixing, the stirring may be, for example, performed in a condition between 200 rpm and 250 rpm, and specifically between 220 rpm and 240 rpm. When the stirring is performed in the above-described condition, this may have a beneficial effect on uniformity in the size of the produced transition metal alloy particles, but the present disclosure is not limited thereto.

The step (S2) is performed to form the M-CPP/C in which the M-C precursor complex is loaded onto at least one of the outer surface of the porous carbon material and the inner surface of the pores of the porous carbon material.

In an embodiment of the present disclosure, the M-CPP may exist in a dispersed state in the solvent used in the step (S1), for example, water. The porous carbon material may be added to the dispersion in which the M-CPP is dispersed, to prepare a dispersion in which the M-CPP and the porous carbon material are dispersed.

In an embodiment of the present disclosure, to produce the M-CPP/C, the pH of the dispersion in which the M-CPP and the porous carbon material are dispersed may range, for example, from 8 to 9.

In another embodiment of the present disclosure, the step (S2) may further include the step of adding a pH regulator to adjust the acidity of the mixture of the M-CPP and the porous carbon material, for example, the dispersion in which the M-CPP and the porous carbon material are dispersed. The pH regulator may be a basic compound or an acidic compound according to the pH of the prepared dispersion.

In an embodiment of the present disclosure, the pH regulator may include a basic compound, and the basic compound may include, for example, an amine-based compound. The amine-based compound may include, for example, tris(hydroxymethyl)aminomethane (TRIS).

In another embodiment of the present disclosure, the pH regulator may include an acidic compound, and the acidic compound may include, for example, an organic carboxylic acid. The organic carboxylic acid may include, for example, formic acid, acetic acid, propionic acid, butyric acid, pivalic acid, oxalic acid, malonic acid, succinic acid, glutaric acid, adipic acid, acrylic acid, benzoic acid, phthalic acid, or two or more of them.

In an embodiment of the present disclosure, the step (S2) may include stirring. The stirring may be, for example, performed at room temperature for 12 hours to 48 hours, specifically 20 hours to 30 hours, for example, 24 hours.

In an embodiment of the present disclosure, the step (S2) may further include the step of filtering and washing after the stirring.

In an embodiment of the present disclosure, the washing may be, for example, performed using water, an organic solvent or a mixture thereof. For example, the washing may be performed by washing with water one to three times and then washing one time using an alcohol-based organic solvent such as ethanol, but the present disclosure is not limited thereto.

In an embodiment of the present disclosure, the step (S2) may further include mixing the M-CPP and the porous carbon material, filtering, washing, and drying.

In an embodiment of the present disclosure, the drying may be, for example, performed in a vacuum, and may be performed in a condition between 50°C and 70°C, and specifically 60°C.

The step (S3) may include thermally treating the M-CPP/C, to produce the carbon composite in which the catalyst including the transition metal alloy particles including cobalt and iron and the carbon coating layer on at least part of the surface of the transition metal alloy particles is loaded onto at least one of the outer surface of the porous carbon material and the inner surface of the pores of the porous carbon material.

In an embodiment of the present disclosure, the different element included in the carbon layer precursor by the thermal treatment may be doped into at least one of the porous carbon material and the carbon coating layer.

In an embodiment of the present disclosure, the thermal treatment may be, for example, performed at 600°C to 1,000°C. Specifically, the thermal treatment may be performed at the temperature between 750°C and 850°C, for example 800°C.

In an embodiment of the present disclosure, the thermal treatment may involve increasing the temperature while uniformly maintaining a rate selected from the range of 0.5°C/min to 10°C/min.

In an embodiment of the present disclosure, the thermal treatment may be performed with the increasing temperature at the rate of 5°C/min.

According to the above-described method, the above-described carbon composite may be produced.

According to another aspect of the present disclosure, there are provided a positive electrode active material including the carbon composite and the sulfur-based compound and a positive electrode including the same.

The positive electrode may include, as the positive electrode active material, the composite of the carbon composite serving as the host of the positive electrode active material and the sulfur-based compound which is the positive electrode active material.

In an embodiment of the present disclosure, the sulfur-based compound may include, for example, sulfur ($S_8$), lithium sulfide ($Li_2S$), lithium polysulfide ($Li_2S_x$, $1<x\leq8$), or a disulfide compound or a mixture thereof, but is limited thereto.

In an embodiment of the present disclosure, the carbon composite and the sulfur-based compound may be mixed at a mix ratio of 1:9 to 9:1. Specifically, the mix ratio may be 1:9 to 5:5, and more specifically 2:8 to 4:6.

In an embodiment of the present disclosure, the positive electrode active material may be formed by mixing the carbon composite with the sulfur-based compound, followed by thermal treatment. The thermal treatment may be performed, for example, at the temperature between 130°C and 200°C, and specifically between 130°C and 180°C or between 150°C and 160°C.

In an embodiment of the present disclosure, in addition to the positive electrode active material including the carbon composite and the sulfur-based compound, the positive electrode for the lithium-sulfur battery may further include a binder. The binder is not limited to a particular type and may include any type of binder that may be used in the positive electrode of the lithium-sulfur battery.

In an embodiment of the present disclosure, the binder may include, for example, polyvinylidene fluoride (PVDF), and specifically PVDF dispersed in N-methyl-2-pyrrolidone (NMP).

In another embodiment of the present disclosure, the binder may include, for example, an aqueous binder such as styrene butadiene rubber (SBR), acrylonitrile multiple copolymer, and specifically an aqueous binder dispersed in an aqueous solvent such as water.

In an embodiment of the present disclosure, the binder may include LA132 (TOB) binder in the market, but the present disclosure is not limited thereto.

In another embodiment of the present disclosure, in addition to the positive electrode active material and the binder, the positive electrode for the lithium-sulfur battery may further include a conductive material and an additive. In this instance, the binder, the conductive material and the additive include those commonly used in the technical field and their description is omitted.

In another embodiment of the present disclosure, the positive electrode for the lithium-sulfur battery may include a positive current collector, and may include a positive electrode active material layer in which the positive electrode active material is coated on one or two surfaces of the current collector together with the binder.

In this instance, the positive current collector is not limited to a particular type and may include any type of positive current collector that does not cause any chemical change to the corresponding battery and is highly conductive.

In an embodiment of the present disclosure, the positive electrode including the carbon composite may have the improved initial capacity and cycling stability, but the effect of the present disclosure is not limited thereto.

In an embodiment of the present disclosure, for example, the positive electrode for the lithium-sulfur battery may have sulfur (S) loading of 2 $mg_s/cm^2$ or more, and specifically 5 $mg_s/cm^2$ or more, for example, 2 to 10 $mg_s/cm^2$, 2.5 to 10 $mg_s/cm^2$ or 5 to 8 $mg_s/cm^2$, but the present disclosure is not limited thereto.

A lithium-sulfur battery according to another aspect of the present disclosure includes a positive electrode, a negative electrode, a separator interposed between the positive electrode and the negative electrode, and an electrolyte solution, and the positive electrode includes the carbon composite and the sulfur-based compound as the positive electrode active material.

In an embodiment of the present disclosure, the negative electrode and the separator are not limited to particular types and may include those used in the lithium-sulfur battery without hindering the objective of the present disclosure.

In an embodiment of the present disclosure, the negative electrode may include, for example, a lithium metal. Alternatively, the negative electrode may include a lithium alloy, and the lithium alloy may include, for example, an alloy of lithium (Li) and metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

Preferably, the negative electrode active material may be a lithium metal, and specifically, a form of a lithium metal foil or a lithium metal powder.

In an embodiment of the present disclosure, the separator may include, without limitation, those commonly used as the separator of the lithium-sulfur battery.

In an embodiment of the present disclosure, the separator may include a porous polyolefin substrate, and may further include inorganic particles on at least one surface of the porous polyolefin substrate if necessary. Additionally, the separator may further include a binder to hold the inorganic particles together, if necessary.

In another embodiment of the present disclosure, the separator may be a film-shaped electrolyte membrane including a solid electrolyte, and further including a binder to closely bind the solid electrolyte, if necessary. The solid electrolyte may include, without limitation, any solid electrolyte commonly used in the lithium-sulfur battery, for example, a polymeric solid electrolyte, an inorganic solid electrolyte or a mixture thereof.

In an embodiment of the present disclosure, the electrolyte solution includes any electrolyte solution commonly used in the lithium-sulfur battery. The electrolyte solution may include a lithium salt and a nonaqueous solvent.

The lithium salt may include, without limitation, any lithium salt commonly used in the electrolyte solution of the lithium-sulfur battery. The lithium salt may include, for example, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(CF_3SO_2)_2NLi$, $(C_2F_5SO_2)_2NLi$, $(SO_2F)_2NLi$, $(CF_3SO_2)_3CLi$, chloro borane lithium, lower aliphatic carboxylic acid lithium, lithium tetraphenyl borate, lithium imide, or two or more of them, but is not limited thereto.

The nonaqueous solvent may include, without limitation, any nonaqueous solvent commonly used in the electrolyte solution of the lithium-sulfur battery. The nonaqueous solvent may include, for example, an ether solvent, a carbonate solvent, an ester solvent, a ketone solvent or a mixture thereof, but is not limited thereto.

In an embodiment of the present disclosure, the ether-based solvent may include an acyclic ether, a cyclic ether or a mixture thereof.

In an embodiment of the present disclosure, the acyclic ether may include, for example, at least one selected from the group consisting of dimethyl ether, diethyl ether, dipropyl ether, dibutyl ether, diisobutyl ether, ethylmethyl ether, ethylpropyl ether, ethyl tert butyl ether, dimethoxymethane, trimethoxymethane, dimethoxyethane, diethoxyethane, dimethoxypropane, diethyleneglycol, diethyleneglycol diethylether, triethyleneglycol, tetraethyleneglycol, ethyleneglycol divinylether, diethyleneglycol divinylether, triethyleneglycol divinylether, dipropylene glycol dimethylene ether, butylene glycol ether, diethyleneglycol ethylmethylether, diethyleneglycol isopropylmethylether, diethyleneglycol butylmethylether, diethyleneglycol tert butyl ethyl ether and ethyleneglycol ethylmethylether. Preferably, the acyclic ether may include at least one selected from the group consisting of dimethoxyethane, diethoxyethane, diethyleneglycol, triethyleneglycol and tetraethyleneglycol, and more preferably dimethoxyethane.

In an embodiment of the present disclosure, the cyclic ether may include, for example, at least one selected from the group consisting of 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene and isosorbide dimethyl ether. Preferably, the cyclic ether may include at least one selected from the group consisting of 2-methylfuran, 1,3-dioxolane, tetrahydrofuran, 2-methyltetrahydrofuran and 2,5-dimethyltetrahydrofuran, and more preferably 2-methylfuran.

In an embodiment of the present disclosure, the electrolyte solution may include $(CF_3SO_2)_2NLi$ as the lithium salt, and a 2-component system of dioxolane (DOL)/dimethoxyethane (DME) as the nonaqueous solvent. For example, the electrolyte solution may further include any commonly used additive such as $LiNO_3$.

In another embodiment of the present disclosure, the electrolyte solution may include one selected from these lithium salts or a mixture thereof, and a mixture of dimethoxyethane (DME) and 2-methylfuran (2-MeF) as the nonaqueous solvent, but the present disclosure is not limited thereto.

In an embodiment of the present disclosure, the lithium-sulfur battery may be, for example, coin-type, cylindrical, pouch-type or prismatic in shape, but the shape of the battery is not limited thereto. In addition, the lithium-sulfur battery may be used in not only a battery cell used as a power source for small devices but also a unit cell of a medium- or large-sized battery module including multiple battery cells, and its application is not limited thereto.

In an embodiment of the present disclosure, the lithium-sulfur battery using the positive electrode including the carbon composite may have not only improved kinetic activity in the redox reaction of sulfur but also improved initial capacity and cycling stability of the battery, but the effect of the present disclosure is not limited thereto.

In an embodiment of the present disclosure, the lithium-sulfur battery may have the improved energy density by increasing the sulfur loading in the electrode and stably operating in lean electrolyte condition, but the effect of the present disclosure is not limited thereto.

In an embodiment of the present disclosure, the lithium-sulfur battery may, for example, have an electrolyte/sulfur (E/S) ratio of 8 µL/mg or less. The low activity of the positive electrode puts limitation on reduction in the E/S ratio, but the present disclosure can stably reduce the E/S ratio, and thus the E/S ratio of the lithium-sulfur battery may have a larger value than the aforementioned range, and it is obvious to those skilled in the art that the lower limit is not limited to a particular value, and the present disclosure is not limited thereto.

In the specification, the E/S ratio may indicate a ratio of the volume of the electrolyte solution and the sulfur weight in the positive electrode.

In an embodiment of the present disclosure, the lithium-sulfur battery may be, for example, manufactured with the E/S ratio of 8 µL/mg or less, 5 µL/mg or less, or 3 µL/mg or less, or 2.9 µL/mg or less.

In an embodiment of the present disclosure, the E/S ratio of the lithium-sulfur battery may be calculated by the ratio of the electrolyte weight to the sulfur weight in the sulfur-carbon composite of the positive electrode, added in the manufacturing step immediately after the manufacture of the lithium-sulfur battery.

In another embodiment of the present disclosure, the E/S ratio of the lithium-sulfur battery may be calculated by analyzing the ratio of the electrolyte weight to the sulfur weight in the sulfur-carbon composite of the positive electrode, as analyzed after disassembling the battery.

As an example, when analyzing the E/S ratio of the lithium-sulfur battery after disassembling the battery, after measuring the total weight of the lithium-sulfur battery in charged state, disassembling the battery, washing the positive electrode, the negative electrode, the separator and the case with a solvent, drying and calculating the sum of the weights of them, the electrolyte weight may be measured by subtracting the weights of the positive electrode, the negative electrode, the separator and the case from the total weight of the battery. In this instance, preferably, the solvent for the washing may include any solvent that extracts the electrolyte from the positive electrode, the negative electrode, the separator and the case. Subsequently, after separating the positive electrode active material layer and the current collector from the dried positive electrode, the weight of sulfur derived from the sulfur-carbon composite present in the positive electrode active material layer may be measured to measure the sulfur weight in the positive electrode. The E/S ratio of the lithium-sulfur battery may be calculated by the ratio of the electrolyte volume to the sulfur weight in the sulfur-carbon composite of the positive electrode.

In an embodiment of the present disclosure, the method for measuring the weight of sulfur derived from the sulfur-carbon composite present in the positive electrode active material layer may include, for example, measuring the amount of sulfur (S) derived from the active material through thermogravimetric analysis (TGA) of a result obtained by scraping off the obtained positive electrode active material layer, but the measurement method is not limited thereto.

In an embodiment of the present disclosure, a state of charge (SOC) at which the lithium-sulfur battery is disassembled may be, SOC 100%, i.e., a fully charged state. In another embodiment of the present disclosure, the SOC at which the lithium-sulfur battery is disassembled may range from SOC 95% to SOS 100%. In an embodiment of the present disclosure, it is necessary to disassemble the lithium-sulfur battery in charged state under an inactive atmosphere for the purpose of safety. For example, the disassembly of the lithium-sulfur battery may be performed under an Ar atmosphere.

In an embodiment of the present disclosure, the energy density of the lithium-sulfur battery may be, for example, 300 Wh/kg or more. For example, the energy density of the lithium-sulfur battery may be 350 Wh/kg or more, for example, 380 Wh/kg or more. The energy density of the lithium-sulfur battery may range, for example, from 300 Wh/kg to 2,600 Wh/kg, from 300 Wh/kg to 1,600 Wh/kg, from 300 Wh/kg to 1,000 Wh/kg, from 300 Wh/kg to 800 Wh/kg, from 300 Wh/kg to 450 Wh/kg, from 330 Wh/kg to 400 Wh/kg, from 350 Wh/kg to 400 Wh/kg, or from 380 Wh/kg to 400 Wh/kg.

In an embodiment of the present disclosure, the energy density of the lithium-sulfur battery may be measured by a commonly used method, and the measurement method is not limited to a particular one. For example, the energy density of the lithium-sulfur battery may be, for example, calculated according to the following Equation based on the specific capacity measured after discharging and charging at room temperature in a range between 1.8 V and 2.7 V for one or more cycles, and then 0.1C discharging. In an embodiment of the present disclosure, each of the initial discharge and charge may be performed at the rate of 0.1C to 0.3C. Specifically, each of the initial discharge and charge may be performed at the rate of 0.1C to 0.2C, for example, 0.1C. Additionally, in an embodiment of the present disclosure, each of the initial discharge and charge may be performed at the rate of 0.1C for three iterations.

In the following Equation, the discharge capacity may be measured in mAh, the operating voltage may be measured in V, and the cell weight may be measured in kg unit.

$$\text{Energy density (Wh/kg)} = \{[(\text{discharge capacity (mAh)} \times \text{operating voltage (V)})/1000]/(\text{cell weight (kg)})\} \qquad \text{[Equation 1]}$$

In an embodiment of the present disclosure, the room temperature may be, for example, from 23°C to 25°C, and specifically 23°C.

In an embodiment of the present disclosure, the charge/discharge rate may range from 0.1C to 0.5 C, for example, 0.3 C, but is not limited thereto, and charging and discharging may be performed at any rate within the aforementioned rate range.

According to another aspect of the present disclosure, there may be provided a positive electrode active material including the sulfur-based compound, and a positive electrode including the carbon composite as the positive electrode additive and a lithium-sulfur battery including the same.

In an embodiment of the present disclosure, as opposed to an aspect of the present disclosure in which the positive electrode includes, as the positive electrode active material, the carbon composite as the host, combined with the sulfur-based compound, the carbon composite may be included in the positive electrode as an additive, separately from the positive electrode active material.

In an embodiment of the present disclosure, when the carbon composite is used as the positive electrode additive, it is possible to improve not only the capacity of the battery but also reactivity with lithium polysulfide, thereby improving the battery performance.

In an embodiment of the present disclosure, when the carbon composite is used as the positive electrode additive, the carbon composite may be included in an amount of 1 to 25 wt%, for example 1 to 15 wt% or 1 to 10 wt%, based on the total weight of the positive electrode active material, the binder and the carbon composite included in the positive electrode active material layer, but is not limited thereto.

In an embodiment of the present disclosure, the positive electrode may comprise, as the positive electrode active material, the sulfur-based compound or the sulfur-based compound loaded onto the commonly used carbon host. For details of the sulfur-based compound, reference is made to the description of the positive electrode according to the above-described aspect. Additionally, the commonly used carbon host may be, for example, the above-described porous carbon material itself, but is not limited thereto.

The lithium-sulfur battery according to an aspect of the present disclosure may be, for example, used in electric vehicles (EV), drones, or urban air mobility (UAM), but the range of application of the present disclosure is not limited thereto.

Hereinafter, the method for manufacturing the carbon composite according to an embodiment of the present disclosure and the result of determining the performance of the lithium-sulfur battery using the same will be described in detail through examples. However, the following examples are provided to describe the present disclosure for illustration purposes and the scope of the present disclosure is not limited thereto.

**[Preparation of carbon composite]**

Example 1 (FeCo/CNT)

First, 568 mg of iron chloride hydrate ($FeCl_2 \cdot 6H_2O$, 99%, Sigma-Aldrich), 502 mg of cobalt chloride hydrate ($CoCl_2 \cdot 6H_2O$, 99%, Sigma-Aldrich) and 800 mg of dopamine hydrochloride (98 wt%, Sigma-Aldrich) were added to 2L of distilled water and stirred at 230 rpm at room temperature (23°C) for 30 minutes to prepare a transition metal-carbon layer precursor polymer (M-C precursor polymer).

1.8g of multi-walled carbon nanotubes (MWCNT)(BET specific surface area 275 $m^2/g$, Carbon Nano-material Technology Co., LTD) were added thereto and stirred at room temperature for 30 minutes to prepare a dispersion. Subsequently, the prepared dispersion maintained the pH at 8.5 with an addition of 3.602 g of Trizma base (tris(hydroxymethyl)aminomethane (TRIS). The obtained dispersion was stirred at room temperature for 24 hours, filtered, washed with distilled water three times, and then washed with ethanol one time, and dried at 60°C to obtain Fe-Co-polydopamine/carbon nanotube composite (M-PDA/CNT) as transition metal-carbon layer precursor polymer/porous carbon material (M-CPP/C).

The obtained M-PDA/CNT was placed in an electric tube furnace under an argon atmosphere to thermally treat at 800°C for 2 hours (temperature increase rate 5°C/min), to obtain a carbon composite ($D_{50}$ 35 $\mu$m). The obtained carbon composite included MWCNT as a porous carbon material; a catalyst located on at least one of the outer surface of the MWCNT and the inner surface of the pores of the MWCNT, and including transition metal alloy particles including cobalt and iron and a carbon coating layer on at least part of the surface of the transition metal alloy particles; and a doped nitrogen. In this instance, the ratio of the thickness of the carbon coating layer to the average particle size ($D_{50}$) of the catalyst was 15%.

**Comparative Example** 1 (Ref)

Multi-walled carbon nanotubes (MWCNT)(BET specific surface area 275 $m^2/g$) were prepared as the carbon composite without catalyst loading.

**[Structure determination of the carbon composite]**

Structure observation of the carbon composite

FIG. 3 shows the STEM image of the as-prepared carbon composite of Example 1, FIG. 4 shows the HRTEM image and the d-spacing graph, FIG. 5 shows the XRD analysis graph, and FIG. 6 shows the TEM image.
Referring to FIGS. 3 and 6, it was confirmed that the carbon composite of Example 1 includes the catalyst including cobalt-iron alloy particles uniformly on MWCNT surface and the carbon coating layer that covers the surface. In particular, referring to FIG. 5(b), as a result of XRD analysis of four prepared particles, according to the above-described method, it was confirmed that reproducibility of the carbon composite was achieved. Additionally, it was confirmed that the size of the catalyst in the carbon composite was uniform in a range between 10 nm and 20 nm.
Referring to FIG. 4, it was confirmed that the carbon composite of Example 1 had the crystalline carbon coating layer on the surface of the transition metal alloy particles, and the transition metal alloy particles had a body-centered cubic structure.

Determination of the amount of the catalyst

TGA analysis was performed to measure the amount of the transition metal alloy particles loaded onto the as-prepared carbon composite of Example 1, and the result is shown in FIG. 7. The TGA analysis measured a reduction in weight of the as-prepared carbon composite while increasing the temperature from 100°C to 800°C (temperature increase rate 10°C/min).
Referring to FIG. 7, because the weight at a point where a temperature change does not appear any longer at increasing temperature corresponds to the weight of the transition metal alloy particles (FeCo), it was confirmed that in the carbon composite of Example 1, the loading amount of the cobalt-iron alloy particles as the transition metal alloy particles was 14.7 wt%.

**[Preparation of lithium-sulfur battery]**

To evaluate the performance of lithium-sulfur batteries using the as-prepared carbon composites of Example 1 and Comparative Example 1, the lithium-sulfur battery was prepared as follows.

Manufacture of positive electrode

25 wt% of the as-prepared carbon composite and 75 wt% of sulfur (sulfur powder, Sigma Aldrich) were mixed and subjected to isothermal heat treatment at 155°C for 2 hours to obtain a positive electrode active material.
To manufacture a working electrode, the as-prepared positive electrode active material and polyacrylonitril binder (PAN binder, LA 132) were mixed at a weight ratio of 9:1 using an N-methyl-2-pyrrolidone (NMP) solvent to prepare a positive electrode slurry.
The prepared positive electrode slurry was coated on a carbon-coated Al foil and dried at 60°C for 8 hours. Subsequently, the electrode was rolled and cut into a case shape to manufacture a positive electrode.

Manufacture of battery

A positive electrode, a negative electrode and a separator between them were placed in a case together with an electrolyte solution to manufacture a battery.
The positive electrode was the positive electrode manufactured as described above, and a porous polypropylene membrane (Celgard 2400, Welcos Ltd.) was prepared as the separator. Lithium metal (200 $\mu$m thickness) was used for each of a reference electrode and a counter electrode.
An electrolyte solution was a solution including 1.0 M bis(trifluoromethane)sulfonamide lithium salt (LiTFSI) as an electrolyte and 2.0 wt% of $LiNO_3$ (99.99% metal basis, Sigma-Aldrich) as an additive in a solvent (Panax E-Tec Co., Korea of 1,3-dioxolane and dimethoxymethane (DOL/DME) at a volume ratio of 1:1).
The sulfur loading in the positive electrode was 2.5 $mg_s/cm^2$ and the E/S ratio of the battery was 10 $\mu$L/ $cm^2$. The coin-type battery was manufactured with CR2032 standard, and for the following electrochemical performance test, the 200 $\mu$m thick-lithium metal was used as the reference electrode and the counter electrode.
Additionally, for the experiment in lean electrolyte condition, each lithium-sulfur battery was manufactured with the sulfur loading in the positive electrode of 7 $mg_s/cm^2$, and the E/S ratio of the battery of 6 $\mu$L/mg.

**[Performance evaluation of lithium-sulfur battery]**

# EP 4 738 460 A1

Determination of conversion reactivity of sulfur according to the carbon composite

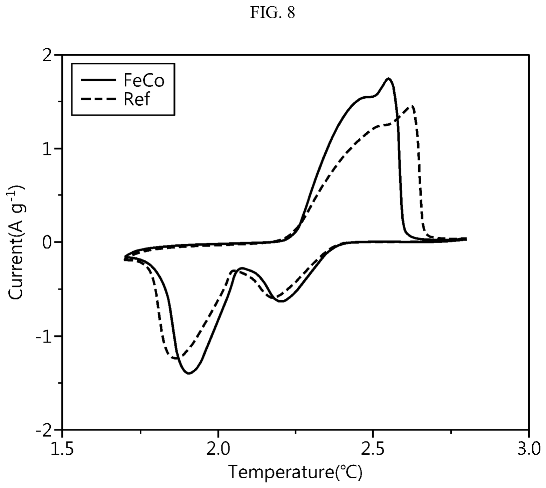

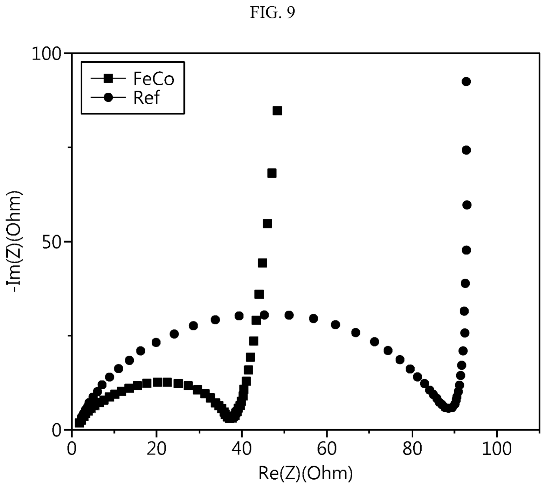

FIG. 8 is the CV graph obtained by operating the lithium-sulfur battery using each of the carbon composite of Example 1 and the carbon composite of Comparative Example 1, and FIG. 9 shows the EIS measurement graph.

Referring to FIGS. 8 and 9, electrochemical reaction for the conversion of sulfur occurred in both the carbon composite (FeCo) of Example 1 and the carbon composite (Ref) of Comparative Example 1, and when the carbon composite of Example 1 was used, it was confirmed that resistance to the conversion reaction of sulfur was low and kinetic activity was further improved.

Charge/discharge curve profile

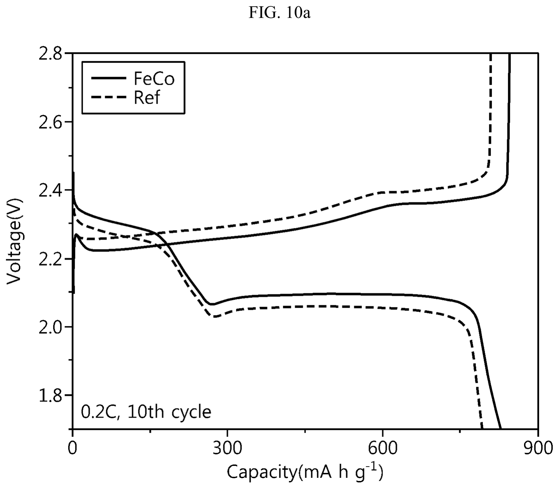

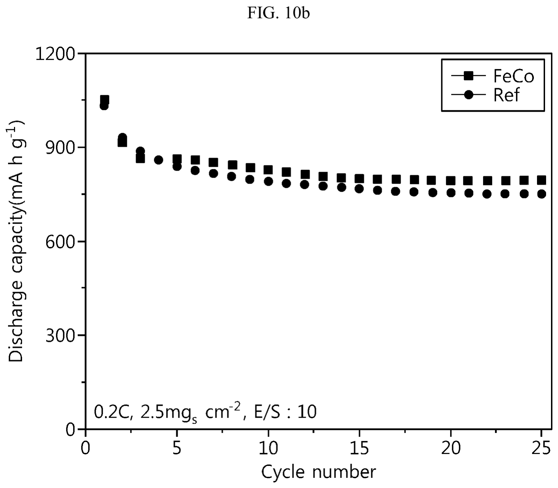

First, the lithium-sulfur battery using each of the carbon composite of Example 1 and the carbon composite of Comparative Example 1 was charged and discharged with 0.2C current density in a range between 1.7V and 2.8V. FIG. 10a shows the voltage-capacity curve obtained in the 10th cycle, and FIG. 10b shows the discharge capacity-cycle curve of the lithium-sulfur battery manufactured with the E/S of 10 $\mu$L/mg.

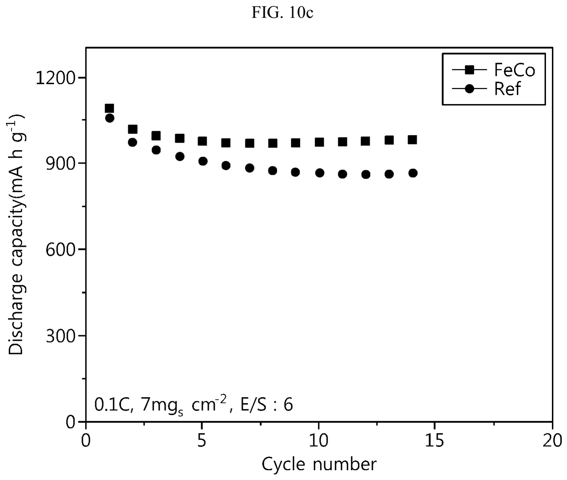

Additionally, FIG. 10c shows the discharge capacity-cycle curve in 0.1C charge/discharge process of the lithium-sulfur battery manufactured with the positive electrode loading of 7 $mg_s/cm^2$, and the E/S of 6 $\mu$L/mg.

According to FIG. 10a, it was confirmed that the use of the carbon composite according to an embodiment of the present disclosure increased the availability of sulfur, thereby improving the discharge capacity. Additionally, according to FIG. 10b, it was confirmed that the use of the carbon composite according to an embodiment of the present disclosure improved the battery life over cycles. In particular, according to FIG. 10c, it was confirmed that the use of the carbon composite according to an embodiment of the present disclosure dramatically improved the life stability of the battery in high loading, lean electrolyte condition.

Evaluation of energy density

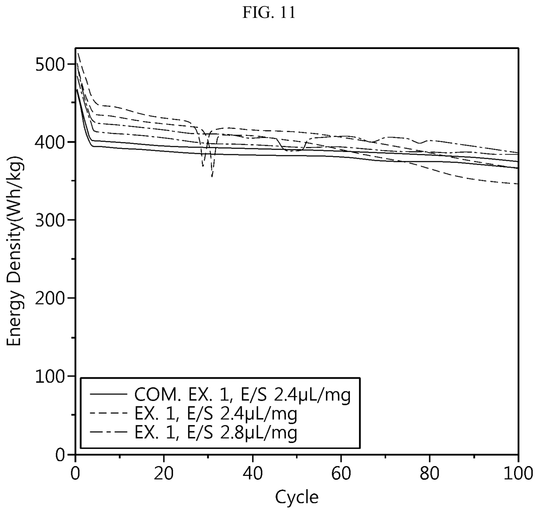

A lithium-sulfur battery was manufactured using each of the carbon composite of Example 1 and the carbon composite of Comparative Example 1 by the same method as the above-described method, such that the E/S ratio of the lithium-sulfur battery using the carbon composite of Example 1 was 2.4 $\mu$L/mg, 2.8 $\mu$L/mg, and the E/S ratio of the lithium-sulfur battery using the carbon composite of Comparative Example 1 was 2.4 $\mu$L/mg. The lithium-sulfur battery was charged and discharged with 0.2C current density in a range between 1.7V and 2.8V, and the discharge capacity was evaluated. FIG. 11 shows the cycle-energy density graph based on the measurement result.

**Claims**

1. A carbon composite comprising:

   a porous carbon material, and
   a catalyst located on at least one of an outer surface of the porous carbon material and an inner surface of pores of the porous carbon material,
   wherein the catalyst includes transition metal alloy particles and a carbon coating layer on at least part of a surface of the transition metal alloy particles,
   wherein the transition metal alloy particles include cobalt (Co) and iron (Fe), and
   wherein at least part of the carbon coating layer includes a crystalline carbon.

2. The carbon composite according to claim 1,
   wherein the transition metal alloy particles include cobalt-iron alloy particles of body-centered cubic structure.

3. The carbon composite according to claim 1,
   wherein an average particle size ($D_{50}$) of the carbon composite is in a range between 100 nm and 100 $\mu$m.

4. The carbon composite according to claim 1,
   wherein an average particle size ($D_{50}$) of the catalyst is 100 nm or less.

5. The carbon composite according to claim 1,
   wherein a ratio of a thickness of the carbon coating layer to an average particle size ($D_{50}$) of the transition metal alloy particles is 40% or less.

6. The carbon composite according to claim 1,
wherein a thickness of the carbon coating layer is 10 nm or less.

7. The carbon composite according to claim 1,
wherein the carbon coating layer has a single layer structure or a multilayer structure of 10 or less layers.

8. The carbon composite according to claim 1,
wherein an amount of the catalyst is in a range between 5 wt% and 50 wt% based on 100 wt% of the carbon composite.

9. The carbon composite according to claim 1,
wherein the porous carbon material includes carbon nanotubes (CNT), graphene, graphene oxide (GO), reduced graphene oxide (rGO), carbon black, graphite, graphite nanofiber (GNF), carbon nanofiber (CNF), activated carbon fiber (ACF), activated carbon, fullerene, or two or more of them.

10. The carbon composite according to claim 1,

    wherein the porous carbon material includes carbon nanotubes (CNT), and
    wherein the carbon nanotubes include entangled CNT.

11. A method for producing the carbon composite according to any one of claims 1 to 10, the method comprising:

    mixing a cobalt (Co)-containing precursor, an iron (Fe)-containing precursor, a carbon layer precursor and a porous carbon material to obtain a transition metal-carbon layer precursor polymer/porous carbon material (M-CPP/C), and
    thermally treating the transition metal-carbon layer precursor polymer/porous carbon material to obtain the carbon composite.

12. The method for producing the carbon composite according to claim 11,
wherein the carbon layer precursor includes dopamine, polydopamine, melamine, 1,10-phenanthroline, polyaniline, carbon nitride (g-CN), glucose, phenylenediamine or a mixture thereof.

13. The method for producing the carbon composite according to claim 11,
wherein the thermal treatment is performed at a temperature ranging from 600°C to 1,000°C.

14. A positive electrode active material comprising the carbon composite according to any one of claims 1 to 10, and a sulfur-based compound.

15. A lithium-sulfur battery comprising:

    a positive electrode, a negative electrode and an electrolyte solution,
    wherein the positive electrode includes the positive electrode active material according to claim 14.

16. The lithium-sulfur battery according to claim 15,

    wherein an E/S ratio is 8 $\mu$L/mg or less, and a sulfur loading in the positive electrode is 2.25 $mg_s/cm^2$ or more, and
    wherein the E/S ratio indicates a ratio of a volume of the electrolyte solution and a sulfur weight in the positive electrode.

17. The lithium-sulfur battery according to claim 15,
wherein an E/S ratio is 3 $\mu$L/mg or less, and an energy density is 380 Wh/kg or more.

FIG. 1

FIG. 2

FIG. 3

(a)

(b)

EP 4 738 460 A1

FIG. 4

(a)

(b)

FIG. 5

(a)

(b)

FIG. 6

(a)

(b)

FIG. 7

FIG. 8

FIG. 9

FIG. 10a

FIG. 10b

0.2C, 2.5mg$_s$ cm$^{-2}$, E/S : 10

FIG. 10c

FIG. 11

## INTERNATIONAL SEARCH REPORT

| International application No. |
| --- |
| **PCT/KR2024/013943** |

| A. | CLASSIFICATION OF SUBJECT MATTER |
| --- | --- |

**H01M 4/36**(2006.01)i; **H01M 4/38**(2006.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); B01J 37/00(2006.01); C01B 32/168(2017.01); C01B 32/182(2017.01); H01M 10/052(2010.01); H01M 10/42(2006.01); H01M 4/90(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬황 (Lithium sulfur), 다공성 (porous), 탄소코팅층 (carbon coating layer), 촉매 (catalyst), 전이금속 (transition metal), 코발트 (cobalt), 철 (iron), 결정 (crystal)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2021-0010334 A (LG CHEM, LTD.) 27 January 2021 (2021-01-27)<br>See abstract; and paragraphs [0023], [0054], [0064], [0067], [0078], [0080], [0083], [0085], [0086], [0180]-[0184] and [0186]-[0188]. | 1-17 |
| Y | SAROHA, R. et al. Hierarchically porous nanofibers comprising multiple core–shell Co3O4@ graphitic carbon nanoparticles grafted within N-doped CNTs as functional interlayers for excellent Li–S batteries. Chemical Engineering Journal. 2021, vol. 426, thesis no. 130805, pp. 1-14.<br>See abstract; pages 2-4; and figure 2d. | 1-17 |
| A | KR 10-2018-0074902 A (OCI COMPANY LTD.) 04 July 2018 (2018-07-04)<br>See abstract; and claims 1-10. | 1-17 |
| A | KR 10-2016-0129938 A (FOUNDATION OF SOONGSIL UNIVERSITY-INDUSTRY COOPERATION) 10 November 2016 (2016-11-10)<br>See abstract; and claims 1-10. | 1-17 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 December 2024** | **19 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/013943**

### C. DOCUMENTS CONSIDERED TO BE RELEVANT

| Category* | Citation of document, with indication, where appropriate, of the relevant passages | Relevant to claim No. |
|---|---|---|
| A | LIM, W.-G. et al. Manipulating local environment of atomically dispersed Fe electrocatalyst for high energy and long cycle Li-S pouch cell. 2021. Research Square. pp. 1-18. Retrieved from <URL:https://web.archive.org/web/20211224175245id_/https://assets.researchsquare.com/files/rs-1168100/v1/253727cf-bf69-4ec9-8747-0985f03afb6f.pdf?c=1639670015>. See abstract. | 1-17 |
| PX | KR 10-2024-0016177 A (LG ENERGY SOLUTION, LTD. et al.) 06 February 2024 (2024-02-06) See abstract; and claims 1-30. | 1-17 |

Form PCT/ISA/210 (second sheet) (July 2022)

INTERNATIONAL SEARCH REPORT
Information on patent family members

International application No.

**PCT/KR2024/013943**

| Patent document cited in search report | | | Publication date (day/month/year) | Patent family member(s) | | | Publication date (day/month/year) |
|---|---|---|---|---|---|---|---|
| KR | 10-2021-0010334 | A | 27 January 2021 | CN | 113812022 | A | 17 December 2021 |
| | | | | CN | 113812022 | B | 22 November 2024 |
| | | | | EP | 3940822 | A1 | 19 January 2022 |
| | | | | JP | 2022-528136 | A | 08 June 2022 |
| | | | | JP | 7469327 | B2 | 16 April 2024 |
| | | | | US | 12155063 | B2 | 26 November 2024 |
| | | | | US | 2022-0173382 | A1 | 02 June 2022 |
| | | | | WO | 2021-010625 | A1 | 21 January 2021 |
| KR | 10-2018-0074902 | A | 04 July 2018 | KR | 10-2610499 | B1 | 07 December 2023 |
| KR | 10-2016-0129938 | A | 10 November 2016 | KR | 10-1782001 | B1 | 27 September 2017 |
| KR | 10-2024-0016177 | A | 06 February 2024 | CN | 117957670 | A | 30 April 2024 |
| | | | | EP | 4325601 | A2 | 21 February 2024 |
| | | | | EP | 4325601 | A3 | 26 June 2024 |
| | | | | JP | 2024-542771 | A | 15 November 2024 |
| | | | | KR | 10-2024-0016156 | A | 06 February 2024 |
| | | | | KR | 10-2734684 | B1 | 26 November 2024 |
| | | | | US | 2024-0038968 | A1 | 01 February 2024 |
| | | | | WO | 2024-025104 | A1 | 01 February 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230125127

- KR 1020240119502